# EUROPEAN PATENT SPECIFICATION

(11) **EP 3 532 397 B1**
(45) Date of publication and mention of the grant of the patent: **18.11.2020**
(21) Application number: 17797269.2
(22) Date of filing: 25.10.2017
(51) Int. Cl.: B65D 21/02, B65B 31/02, B65D 51/24, G01F 19/00

(54) **CONTAINER, SEAL WITH BLISTER ELEMENT, AND SCOOP THEREFOR**
BEHÄLTER, VERSCHLUSS MIT BLISTERELEMENT UND LÖFFEL DAFÜR
RÉCIPIENT, JOINT D'ÉTANCHÉITÉ AVEC ÉLÉMENT COQUE, ET ÉCOPE ASSOCIÉE

(30) Priority: 25.10.2016 WO PCT/EP2016/075706
(43) Date of publication of application: 04.09.2019
(73) Proprietor: N.V. Nutricia, 2712 HM Zoetermeer (NL)
(72) Inventor: VAN DRECHT, Wido, 3584 CT Utrecht (NL); BETANCOR, Maria Bernabe, 3584 CT Utrecht (NL)
(74) Representative: Nederlandsch Octrooibureau
(86) International application number: PCT/EP2017/077363
(87) International publication number: WO 2018/077981

(56) References cited:
- EP-A1- 2 335 502
- EP-A1- 2 589 544
- WO-A1-2007/125064
- WO-A1-2014/003542
- WO-A1-2014/129887
- WO-A1-2016/072913
- WO-A2-2009/081050
- JP-A- 2005 162 313
- JP-U- H0 740 523
- JP-U- S5 386 252
- NL-C1- 1 023 615
- US-A- 2 613 537
- US-A- 3 679 093
- US-A- 5 251 758

## Description

### Field of the invention

The present invention relates to packaging containers for powdered nutritional products, and in particular relates to containers for infant formula, or other powdered food products.

### Background art

Such containers are well-known. However, the known container suffers several drawbacks which have an impact on issues such as the hygienic use of the container, the perceived freshness of the contained product, and convenient consumption and preparation of the food product.

A problem with the known container is that the scoop is normally provided within the powdered food product itself. In such containers, a scoop is dropped into the empty container during production, and thereafter the powdered food product is dispensed into the container. This results in a scoop that is buried within the food product. If that is the case, the easiest way for a consumer to retrieve the scoop is by inserting their hand into the container. Alternatively, they may have to find an implement to do so. In the best case scenario, this at least adds the step and time of washing and/or desinfecting hands or the implement used for retrieval of the scoop. If the hands (or implement) are not washed or are not washed properly, the product may become contaminated with external agents during retrieval of the scoop. In the case of powdered infant formula, this should be avoided as much as possible in view of the infant's immature, developing immune system. Adding to these drawbacks, the consumer will also have to spend time washing their hands or implement after retrieval of the scoop from the can. This process of retrieving the scoop may result in a perception of the container as unhygienic. Moreover, such a container may be perceived as somewhat wasteful, as some powdered food product may adhere to the hands or implement used for retrieval of the scoop, and this might entail a loss of food product.

For this reason, consumers may prefer that the scoop be initially provided in a manner in which it is not in contact with the powder or food product in the container as shown for instance in WO 2014/003542. This application discloses a container for a powdered nutritional product, the container comprising: a can having a base and an upstanding sidewall defining an interior space, the sidewall extending to a rim defining an opening to the interior space; a seal and blister element combination, and a scoop, the scoop having a minor dimension and a major dimension and being sealed within a scoop recess, whereby contact between the scoop and the powdered nutritional product is prevented.

Other containers are known in which the scoop is provided in the lid with a holding element, and therefore the scoop is not in contact with the powdered food product during initial retrieval. While such a container facilitates retrieval of the scoop, the container is bulky and expensive due to the greater amount of material used in the lid. Attempts have been made at improving such arrangements, but these still have drawbacks.

However, this is disadvantageous because the lid must be made high enough to accommodate the entire volume of the scoop. This is because the can must be sealed at the rim in order to preserve the freshness of the product during transport and sale.

Another problem with the scoops typically provided with the known containers is that of dosing or measuring accuracy. This is of particular importance to parents or caregivers of infants who have to dose the correct amount of infant formula according to the nutritional needs of the infant as laid down in nutritional legislation. Such information on the nutritional needs is typically taken into consideration by nutritionists that have calculated the correct amounts of a particular commercially available infant formula to be dosed. During dosing the powdered food, product may accumulate on the handle, particularly in the area of the handle nearest to the bowl. To prevent incorrect dosing, this excess product would have to be manually removed by the consumer and further, the consumer will most likely prefer to drop back any excess product into the can. Not only is this time-consuming, but it can also expose the reintegrated product and the product in the can to external agents.

Moreover, the known containers further require additional material than for a standard container where accuracy is not needed, because a leveling part is provided which extends from the rim of the can.

Therefore, there is a need for an improved container which allows consumers to more conveniently retrieve a scoop and use of the product, while avoiding high manufacturing costs.

### Summary of the invention

According to the present invention, there is provided a container for a powdered nutritional product, the container comprising:a can having a base and an upstanding sidewall defining an interior space, the sidewall extending to a rim defining an opening to the interior space; and a seal and blister element combination, wherein the seal is attached to the rim to sealingly close the opening and the blister element is attached to an underside of the seal, wherein a scoop recess is formed between the blister element and the seal;a scoop, the scoop having a minor dimension and a major dimension and being sealed within the scoop recess, whereby contact between the scoop and the powdered nutritional product is prevented.

By providing a scoop recess on the seal, contact between the scoop and the powdered nutritional product is prevented. The blister element is attached to the underside of the seal, that is, the side of the seal that faces the inside of the container. Providing the scoop inside such a blister allows the consumer to easily retrieve the scoop, while avoiding the need for any hand contact with the food product during retrieval of the scoop. Such a container can be advantageously used as a container for infant formula. The blister element is preferably formed of a relatively rigid material, while the seal is preferably formed of a relatively flexible material as it needs to be peeled off, The blister element may be formed of polyethylene terephthalate (PET). Alternatively, the blister element may be formed of any material that would be suitable for use in food product containers. The seal may comprise a material such as aluminium, or any other material suitable for use in food product containers which is known to the skilled person.

In an embodiment, the container further comprises a lid, connectable to the can to cover the seal and/or to close the opening. The height between a lower surface of the lid and an upper surface of the seal is less than the height of the scoop. The height of the scoop is defined herein as the highest point of the scoop when the scoop is disposed horizontally. This may also be referred to as the minor dimension of the scoop. The highest point will normally be found along the bowl of the scoop. Since the scoop is provided within the can itself, the lid need not be as high as the lid in known containers in which the scoop is provided between the lid and the seal of the can. This reduces the amount of material for manufacturing the lid, and decreases the overall weight and size of the container with lid reducing storage space needs and transport costs. In a preferable embodiment, the height of the lid is no more than 15 mm.

In an embodiment, the seal comprises a pulltab for peeling off the seal from the can. This provides a convenient gripping point for the consumer to peel the seal off the can. The pull tab may be arranged to extend back on top of the seal, or to protrude away from the seal.

According to an embodiment, the scoop recess within the blister is elongate, defining a longitudinal axis. This will correspond closely to the length or major dimension of the scoop. The pulltab may be provided in a substantially perpendicular relation to the longitudinal axis of the blister. The longitudinal axis of the blister is defined herein as that axis along the greatest length of the blister. This minimizes the interference or resistance from the blister along the peel-off direction (resulting from the relative rigidity of the blister material) when the seal is being pulled off and as such reduces undesired ripping of the seal. For a circular seal, the blister may be aligned across a diameter of the seal and the pull tab may allow removal of the seal in a direction transverse to this diameter.

According to a further embodiment, the lid has an upper part and a lower part, wherein the lower part has a greater radius than the upper part, and wherein the radius of the upper part is smaller than the radius of the rim of the can. This enables convenient stacking of the lids, which can be advantageous during as assembly process. This also reduces the material and manufacturing costs of the lid.

In a further embodiment, the upper part of the lid has a profiled outer circumference that is complementary with the base of the container, allowing stacking therewith. This enables convenient stacking of multiple containers during transport and/or during commercial or household storage In an embodiment, the lid comprises a holding element for holding the scoop, which can be arranged to receive a scoop that has been removed from the scoop recess.

According to an embodiment, the lid is circular and the holding element may be arranged to hold the scoop in any diametric orientation with respect to the lid. This allows for faster and convenient storage of the scoop on the lid, as there is no need for the user to align the scoop with respect to the holding element.

Preferably, the can or container is a metal, cylindrical as regularly used in the field of infant formulae having a diameter of between 90 and 130 mm. Typically, such metal cans have a standard diameter of 99 or 127 mm. The seal, blister element and lid of the present invention are preferably adapted to fit such a metal can.

According to a further embodiment of the invention, the container is provided with a scoop, the scoop comprising a bowl and a handle attached to an upper part of the bowl, the handle extending downwardly away from the bowl forming a downward extension until reaching a deflection point, and extending horizontally away from the bowl from said deflection point thereby forming a horizontal extension. Having the handle attached to the upper part of the bowl provides a surface that conveniently with leveling of the product in the scoop. Further, providing a handle that is to the bottom of the bowl facilitates storage of the scoop on the lid in a position in which the bowl opening faces downward toward the food product. This allows food product remnants in the scoop to fall back into the container. Alternatively, the handle may be attached to the bowl near the bottom of the bowl. The deflection point may be located substantially at the same height as the bottom of the bowl or it may be located above the height of the bottom of the bowl. The downward handle extension may have a curvature, which further facilitates leveling of the scoop.

Preferably, the downward extension of the handle is at least partly bifurcated into two subextensions, so that the handle is attached to the bowl at two separate locations, each of the two subextensions having a width that is smaller than the width of the horizontal extension of the handle. The downward extension may alternatively be trifurcated, or separated into any number of extensions. A handle that is not so wide near its attachment to the bowl of the scoop prevents the accumulation of powdered food product on the handle.

Preferably, the downward extension of the handle and the horizontal extension are continuous or integrated formed.

Preferably, the height of the bowl increases gradually from a substantially central point on the sides of the bowl towards the front of the bowl and towards the handle of the scoop, thereby forming concave, curved sides, so that the scoop can be leveled against the rim of the can.

Preferably, an opening in the handle for attaching the scoop to an underside of the lid.

### Short description of drawings

The present invention will be discussed in more detail below, with reference to the attached drawings, in which
Fig. 1 schematically depicts a container according to an embodiment of the invention.
Fig. 2 schematically depicts a seal with a blister element and a scoop according to a further embodiment the invention.
Fig. 3 schematically depicts a lid for a container according to an embodiment of the invention.
Fig. 4 schematically depicts a scoop according to an embodiment of the invention.
Fig. 5 schematically depicts a process of manufacture of a blister element on a seal and a container and according to an aspect of the invention.

### Description of embodiments

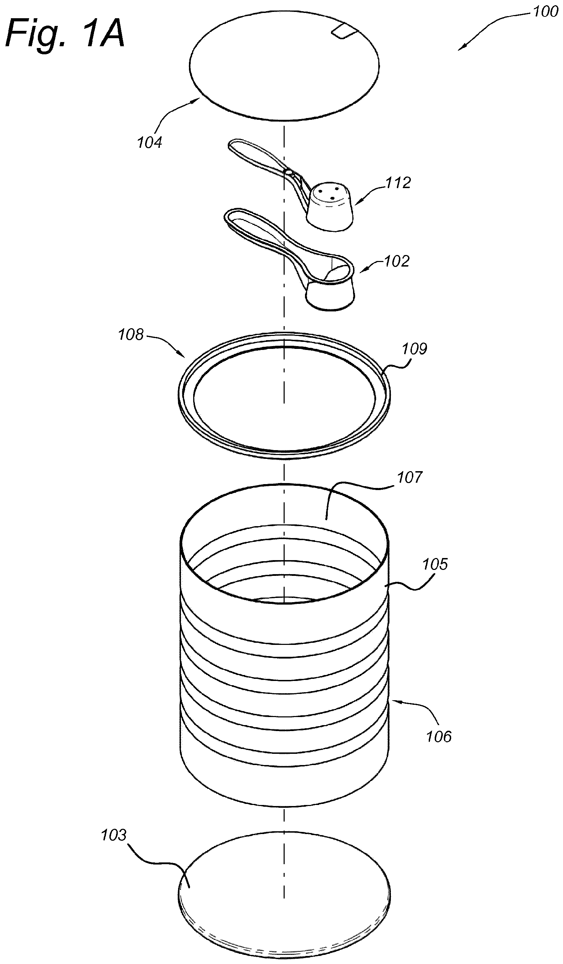

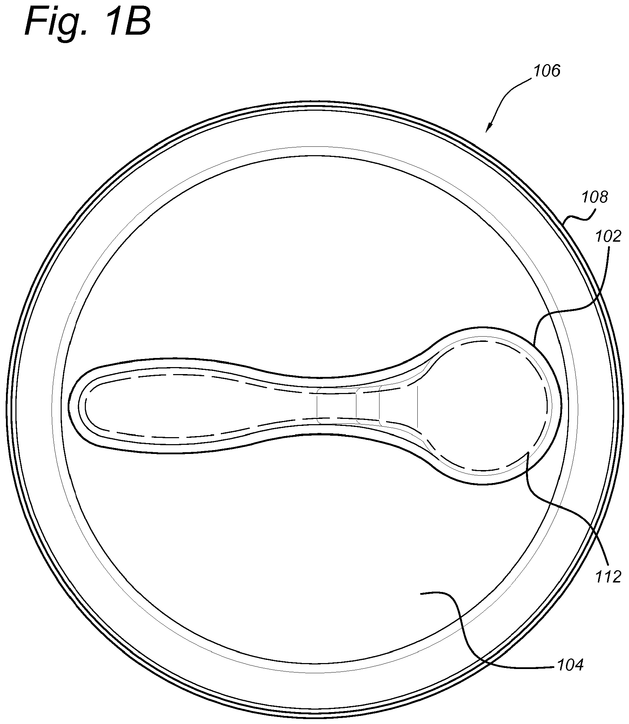

Fig. 1 shows a container 100 according to an exemplary embodiment of the invention, the container 100 being provided with a blister element 102 for attachment onto a seal 104. The container has a base 103 a sidewall 105 defining an interior space 107. The seal 104 is on a can 106. The can 106 has a rim 108, and a bottom panel 110. The rim 108 has an upper edge 109, the rim defining an opening 111. The blister element 102 contains a scoop 112. A top-view of the can 106 is also shown. The blister element 102 which is provided on a seal 104 has been attached to the rim 108 of the can 106, and contains a scoop 112.

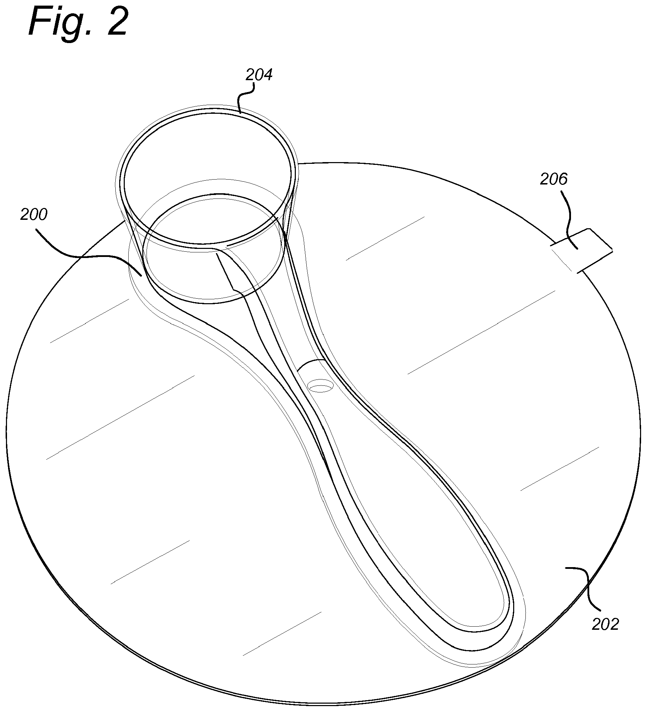

Fig. 2 shows a blister element 200 holding a scoop provided on a seal 202 according to an exemplary embodiment of the invention. The blister element 200 holds a scoop 204. The seal 202 has an upper surface 203 further comprises a pulltab 206.

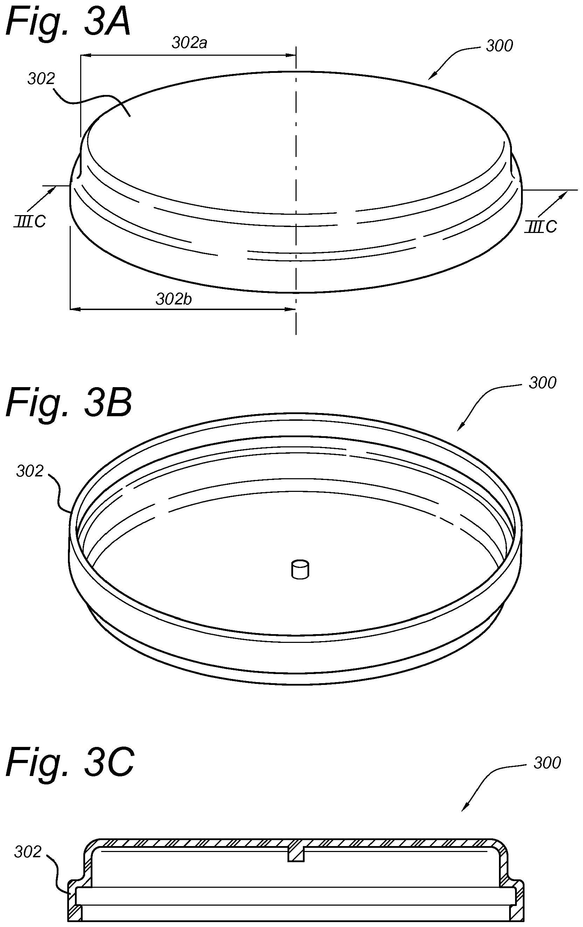

Fig. 3 shows a lid 300 having a stepped, vertical cross-section. The lid 300 has an upper part 302 with a radius 302a, and a lower part 304 with a radius 304a. The radius 302a is smaller than the radius 304b.

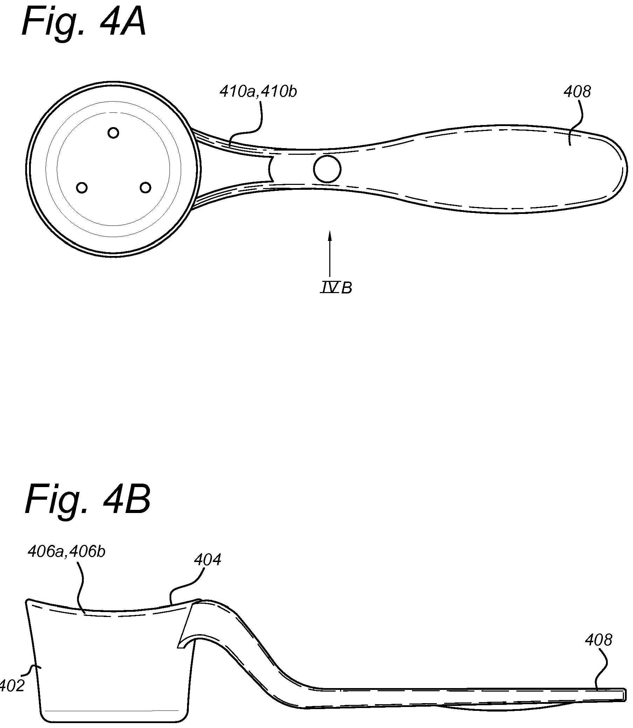

Fig. 4 shows a top view and a side view of scoop 400 with a bowl 402. The bowl 402 having an opening 404 and having concave sides 406a, b, and a height at the frontal area 404 and at the rear area 406 which is greater than the height of the sides 402a, b. The scoop has a handle 408 that is attached at an upper area of the scoop bowl 402. The handle is bifurcated into two parts 410a, b.

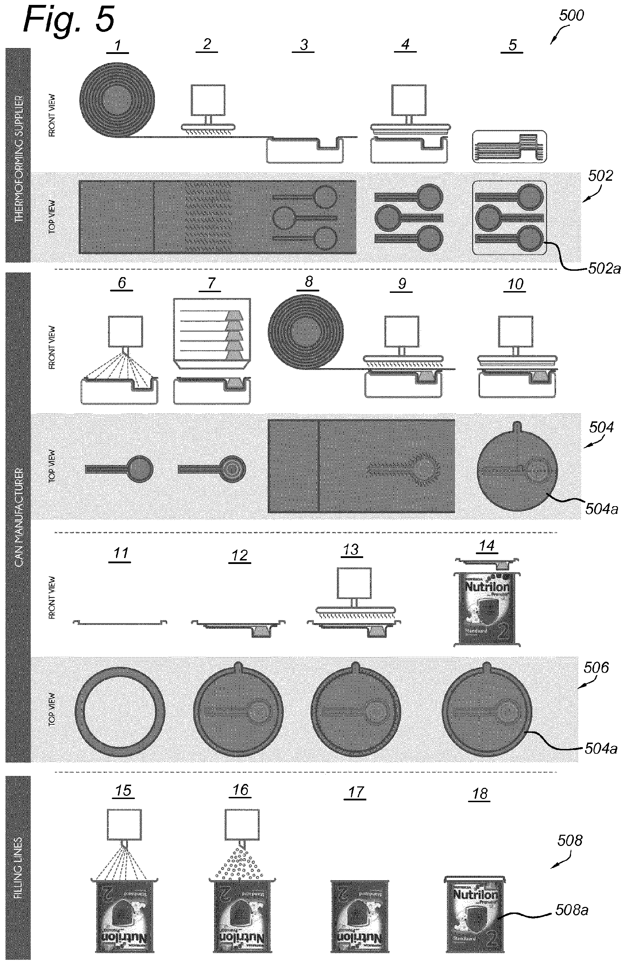

Fig. 5 shows various processes of manufacture of various embodiments according to the invention. In a process 502, a blister matrix 502a is formed, containing a plurality of blisters, each blister holding a scoop.

In a process 504, a blister and seal combination 504a is formed, wherein a blisters each containing a scoop are respectively attached to a seal.

In a process 506, a blister and seal combination (such as 504a above) is attached to a rim of an empty can, which can is not provided with a bottom panel.

In a process 508, a can (such as the can 506a) is filled with a powdered nutritional product through its bottom opening. A bottom panel is subsequently attached to the bottom edge of the can, and a lid for closing the can is applied. The present invention has been described above with reference to a number of exemplary embodiments as shown in the drawings. The scope of protection is defined by the appended claims.

## Claims

1. A container (100) for a powdered nutritional product, the container comprising:
a can (106) having a base (103) and an upstanding sidewall (105) defining an interior space (107), the sidewall extending to a rim (108) defining an opening (111) to the interior space; and
a seal (202) and blister element (200) combination, wherein the seal is attached to the rim to sealingly close the opening and the blister element is attached to an underside of the seal, wherein a scoop recess is formed between the blister element and the seal;
a scoop (204), the scoop having a minor dimension and a major dimension and being sealed within the scoop recess, whereby contact between the scoop and the powdered nutritional product is prevented.

2. The container according to claim 1, further comprising a lid (300), connectable to the can to cover the seal and/or to close the opening.

3. The container according to claim 1 or claim 2, wherein a height between an underside of the lid and an upper surface of the seal is less than the minor dimension of the scoop.

4. The container according to any of the preceding claims, wherein the seal comprises a pull-tab (206) for peeling off the seal and blister element from the can.

5. The container according to claim 4, wherein the scoop recess is elongate and the pull-tab is provided in a substantially perpendicular relation to a longitudinal axis of the blister element.

6. The container according to any of the preceding claims, wherein the blister element is formed of polyethylene terephthalate (PET).

7. The container according to any of the preceding claims, wherein the seal comprises aluminium.

8. The container of any of the preceding claims, further comprising a quantity of infant formula within the interior space.

9. The container according to any of claims 2- 8, wherein the lid has an upper part (302) and a lower part (304), wherein the lower part has a greater radius than the upper part, and wherein the radius of the upper part is smaller than the radius of the rim of the can.

10. The container according to claim 9, wherein the upper part of the lid has a profiled outer circumference that is complementary with the base of the container, allowing stacking therewith.

11. The container according to any of claims 2-10, wherein the lid comprises a holding element for holding the scoop.

12. The container according to claim 11, wherein the lid is circular and the holding element is arranged to hold the scoop in any diametric orientation with respect to the lid.

13. The container according to any of claims 11 or 12, wherein the holding element comprises a pin extending from the underside of the lid.

14. The container according to any of the preceding claims, wherein the can is a tin can and/or has a circular cross-section with a diameter between 9-12 cm.

15. The container according to any of the preceding claims, wherein the scoop comprises a bowl (402), open at its upper part, and a handle (408) attached to the upper part of the bowl, the handle extending downwardly away from the bowl forming a downward extension until reaching a deflection point, and extending horizontally away from the bowl from said deflection point thereby forming a horizontal extension.

## Patentansprüche

1. Behälter (100) für ein pulverförmiges Ernährungsprodukt, der
eine Dose (106) mit einem Boden (103) und einer aufrechten Seitenwand (105), die einen Innenraum (107) definieren, wobei sich die Seitenwand bis zu einem Rand (108) erstreckt, der eine Öffnung (111) zum Innenraum definiert, und
eine Kombination aus Versiegelung (202) und Blisterelement (200), wobei die Versiegelung am Rand angebracht ist, um die Öffnung dicht zu verschließen, und das Blisterelement an eine Unterseite der Versiegelung angebracht ist, wobei zwischen dem Blisterelement und der Versiegelung eine Löffelaussparung gebildet ist,
einen Löffel (204), der eine kleinere Abmessung und eine größere Abmessung aufweist und innerhalb der Löffelaussparung versiegelt ist, wodurch ein Kontakt zwischen dem Löffel und dem pulverförmigen Ernährungsprodukt verhindert wird,
umfasst.

2. Behälter nach Anspruch 1, der zudem einen Deckel (300) umfasst, der mit der Dose verbunden werden kann, um die Versiegelung abzudecken und/oder die Öffnung zu schlie-ßen.

3. Behälter nach Anspruch 1 oder 2, bei dem eine Höhe zwischen einer Unterseite des Deckels und einer oberen Oberfläche der Versiegelung geringer ist als die kleinere Abmessung des Löffels.

4. Behälter nach einem der vorhergehenden Ansprüche, bei dem die Versiegelung eine Aufreißlasche (206) umfasst, um die Versiegelung und das Blisterelement von der Dose abzuziehen.

5. Behälter nach Anspruch 4, bei dem die Löffelaussparung länglich ist und die Aufreißlasche in einer im Wesentlichen senkrechten Anordnung zu einer Längsachse des Blisterelements angebracht ist.

6. Behälter nach einem der vorhergehenden Ansprüche, bei dem das Blisterelement aus Polyethylentherephthalat (PET) gebildet ist.

7. Behälter nach einem der vorhergehenden Ansprüche, bei dem die Versiegelung Aluminium enthält.

8. Behälter nach einem der vorhergehenden Ansprüche, der zudem eine Menge einer Säuglingsnahrung innerhalb des Innenraums enthält.

9. Behälter nach einem der Ansprüche 2 bis 8, bei dem der Deckel einen oberen Teil (302) und einen unteren Teil (304) aufweist, wobei der untere Teil einen größeren Radius als der obere Teil aufweist und wobei der Radius des oberen Teils kleiner als der Radius des Rands der Dose ist.

10. Behälter nach Anspruch 9, bei dem der obere Teil des Deckels einen profilierten Außenumfang aufweist, der komplementär zum Boden des Behälters ist, wodurch das Stapeln damit ermöglicht wird.

11. Behälter nach einem der Ansprüche 2 bis 10, bei dem der Deckel ein Halteelement zum Halten des Löffels umfasst.

12. Behälter nach Anspruch 11, bei dem der Deckel rund ist und das Halteelement dazu ausgelegt ist, den Löffel in einer beliebigen zum Deckel diametralen Ausrichtung zu halten.

13. Behälter nach einem der Ansprüche 11 oder 12, bei dem das Halteelement einen Stift umfasst, der sich von der Unterseite des Deckels erstreckt.

14. Behälter nach einem der vorhergehenden Ansprüche, bei dem die Dose eine Blechdose ist und/oder einen kreisförmigen Querschnitt mit einem Durchmesser zwischen 9 und 12 cm aufweist.

15. Behälter nach einem der vorhergehenden Ansprüche, bei dem der Löffel eine Schale (402), die an ihrem oberen Teil offen ist, und einen Griff (408), der am oberen Teil der Schale befestigt ist, umfasst, wobei sich der Griff unter Bildung einer nach unten gerichteten Verlängerung von der Schale weg bis zum Erreichen eines Ablenkpunkts nach unten erstreckt und sich von diesem Ablenkpunkt horizontal von der Schale weg erstreckt, wodurch eine horizontale Verlängerung gebildet wird.

## Revendications

1. Récipient (100) pour un produit nutritionnel en poudre, le récipient comprenant :
une boîte (106) ayant une base (103) et une paroi latérale verticale (105) délimitant un espace intérieur (107), la paroi latérale s'étendant jusqu'à un rebord (108) définissant une ouverture (111) vers l'espace intérieur ; et
une combinaison d'un joint d'étanchéité (202) et d'un élément coque (200), dans lequel le joint d'étanchéité est fixé au rebord pour fermer de manière étanche l'ouverture et l'élément coque est fixé à un côté inférieur du joint d'étanchéité, dont un évidement pour cuillère est formé entre l'élément coque et le joint d'étanchéité ;
une cuillère (204), la cuillère ayant une dimension mineure et une dimension majeure et étant scellée à l'intérieur de l'évidement pour cuillère, de telle sorte qu'un contact entre la cuillère et le produit nutritionnel en poudre est empêché.

2. Récipient selon la revendication 1, comprenant en outre un couvercle (300), pouvant être connecté à la boîte pour recouvrir le joint d'étanchéité et/ou pour fermer l'ouverture.

3. Récipient selon la revendication 1 ou la revendication 2, dans lequel une hauteur entre un côté inférieur du couvercle et une surface supérieure du joint d'étanchéité est inférieure à la dimension mineure de la cuillère.

4. Récipient selon l'une quelconque des revendications précédentes, dans lequel le joint d'étanchéité comprend une tirette (206) pour enlever le joint d'étanchéité et l'élément coque à partir de la boîte.

5. Récipient selon la revendication 4, dans lequel l'évidement pour cuillère est allongé et la tirette est prévue dans une relation sensiblement perpendiculaire par rapport à un axe longitudinal de l'élément coque.

6. Récipient selon l'une quelconque des revendications précédentes, dans lequel l'élément coque est formé de polyéthylène téréphtalate (PET).

7. Récipient selon l'une quelconque des revendications précédentes, dans lequel le joint d'étanchéité comprend de l'aluminium.

8. Récipient selon l'une quelconque des revendications précédentes, comprenant en outre une quantité de préparation pour nourrisson dans l'espace intérieur.

9. Récipient selon l'une quelconque des revendications 2 à 8, dans lequel le couvercle a une partie supérieure (302) et une partie inférieure (304), dans lequel la partie inférieure a un rayon plus grand que la partie supérieure, et dans lequel le rayon de la partie supérieure est plus petit que le rayon du rebord de la boîte.

10. Récipient selon la revendication 9, dans lequel la partie supérieure du couvercle a une circonférence externe profilée qui est complémentaire de la base du récipient, permettant un empilage avec celle-ci.

11. Récipient selon l'une quelconque des revendications 2 à 10, dans lequel le couvercle comprend un élément de maintien pour maintenir la cuillère.

12. Récipient selon la revendication 11, dans lequel le couvercle est circulaire et l'élément de maintien est agencé pour maintenir la cuillère dans une quelconque orientation diamétrale par rapport au couvercle.

13. Récipient selon l'une quelconque des revendications 11 ou 12, dans lequel l'élément de maintien comprend une broche s'étendant depuis le côté inférieur du couvercle.

14. Récipient selon l'une quelconque des revendications précédentes, dans lequel la boîte est une boîte de conserve et/ou a une section transversale circulaire avec un diamètre compris entre 9 et 12 cm.

15. Récipient selon l'une quelconque des revendications précédentes, dans lequel la cuillère comprend une cuvette (402), ouverte au niveau de sa partie supérieure, et un manche (408) fixé à la partie supérieure de la cuvette, le manche s'étendant vers le bas à l'opposé de la cuvette en formant une extension vers le bas jusqu'à atteindre un point de déviation, et s'étendant horizontalement à l'opposé de la cuvette à partir dudit point de déviation, en formant ainsi une extension horizontale.
